# EUROPÄISCHE PATENTSCHRIFT

(11) **EP 2 233 965 B1**
(45) Veröffentlichungstag und Bekanntmachung des Hinweises auf die Patenterteilung: **02.12.2015**
(21) Anmeldenummer: 10003080.8
(22) Anmeldetag: 23.03.2010
(51) Int. Cl.: G02C 11/06, G02C 5/14

(54) **Hörgerätmodul und Hörbrille**
Hearing aid module and hearing aid spectacles
Module d'appareil auditif et lunettes avec correction auditive

(30) Priorität: 24.03.2009 DE 102009014114
(43) Veröffentlichungstag der Anmeldung: 29.09.2010
(73) Patentinhaber: Bruckhoff Apparatebau GmbH, 30159 Hannover (DE)
(72) Erfinder: Bruckhoff, Henning, 30159 Hannover (DE)
(74) Vertreter: Bremer, Ulrich

(56) Entgegenhaltungen:
- EP-A1- 1 517 170
- DE-A1- 1 437 379
- DE-A1-102007 028 652
- DE-B- 1 243 241
- DE-B3-102005 062 577

## Beschreibung

Die Erfindung betrifft ein Hörgerätmodul sowie eine Hörbrille.

Hörbrillen bzw. Hörgerät-Brillen kombinieren die Funktion einer Brille mit derjenigen eines Hörgerätes. Hierbei ist im Allgemeinen das Hörgerät an einem Brillenbügel angebracht, der somit als Funktionsbügel zur Aufnahme und Positionierung des Hörgerätes dient.

In dem Funktionsbügel können unterschiedliche Komponenten angeordnet sein, je nach Verwendung als HdO-Hörgerät, bei dem der Hörer im Funktionsbügel angebracht ist und ein Schallschlauch zu dem Gehörgang geführt wird, oder als Außenhörersystem, bei dem ein kleiner Hörer direkt in den Gehörgang gesetzt wird. Der Funktionsbügel ist im Allgemeinen deutlich größer dimensioniert als ein gewöhnlicher Bügel, z. B. der andere Bügel bei einseitiger Schwerhörigkeit.

Die EP 1517170 A1 zeigt eine Hörbrille und ein Verfahren zur Herstellung einer derartigen Hörbrille aus einer handelsüblichen Brille. Die Brille weist einen linken und rechten Brillenbügel auf, wobei auf einem der Brillenbügel in üblicher Weise ein Tragkörper aus Kunststoff zur Ausbildung des Endbereichs bzw. Löffelbereichs aufgesetzt wird. Auf das biegbare, verjüngte Brillenbügel-Endstück wird ein Hörgerät gesetzt, das einen Kunststoffkörper mit einem geeigneten Kanal zur Aufnahme des Brillenbügel-Endstücks aufweist. Nachfolgend wird der Kunststoffkörper mitsamt dem Brillenbügel-Endstück in eine geeignete Form gebogen, so dass es für den Benutzer geeignet anliegt. Das Hörgerät ist als HdO-Hörgerät mit einem Schallschlauch ausgebildet, der in den Gehörgang des Benutzers eingesetzt wird.

Die EP 1 791 392 A1 beschreibt eine Brille mit einem ergänzend angesetzten Knochenleitungshörgerät. Hierbei enden die Brillenbügel vor dem Außenohr, wobei ein Aufsatzbereich des Knochenleitungshörgerätes um das Außenohr gelegt werden kann. Somit wird zwar bereits die Verwendung eines herkömmlichen Optikgestells ermöglicht; es ergibt sich jedoch ein auffälliges Design, insbesondere durch den verdickten Kunststoffkörper des Funktionsbügels.

Die JP 2006157318 A beschreibt eine Brille mit ergänzend angesetztem Knochenleitungshörgerät. Auch die JP 2004320605 A zeigt eine derartige Brille, wobei hier das Knochenleitungshörgerät längsverschiebbar auf dem Bügel aufgenommen ist.

Die DE 8706244 U1 beschreibt eine Hörbrille, bei der an einem vorderen Bügelansatz über ein Verbindungselement ein verdickt ausgebildetes Endteil angebracht ist, das als Teil eines Hörgerätes dient und ein Mikrophon, einen Verstärker und ggf. Lautstärke-Regler aufnimmt.

Die DE 103 43 010 B3 beschreibt eine Hörhilfebrille, bei der eine Otoplastik auf ein gerades, verlängertes Endstück eines Brillenbügels aufgesetzt und durch Reibschluss aufgnommen wird, und nachfolgend die Otoplastik mitsamt verlängertem Ende gebogen wird. Somit ist die Otoplastik bei der fertigen Hörhilfebrille in dem gebogenen HdO-Teil angeordnet.

Derartige Hörbrillen benötigen somit eine jeweilige individuelle Herstellung und Anpassung. Es werden im Allgemeinen spezielle Hörbrillen für diesen Zweck gefertigt, die entsprechend kostspielig sind und nicht den individuellen Designansprüchen des Benutzers Rechnung tragen.

Der Erfindung liegt die Aufgabe zu Grunde, ein Hörgerätmodul sowie eine Hörbrille mit einem derartigen Hörgerätmodul zu schaffen, die eine individuelle Anpassbarkeit und leichte Bedienbarkeit bei optisch ansprechender Ausbildung ermöglichen.

Diese Aufgabe wird durch ein Hörgerätmodul nach Anspruch 1 sowie eine Hörbrille nach Anspruch 12 gelöst. Die Unteransprüche beschreiben bevorzugte Weiterbildungen.

Erfindungsgemäß wird somit ein Hörgerätmodul geschaffen, das über eine Steckverbindung auf einen Bügelansatz einer Brille steckbar ist. Das Hörgerätmodul bzw. aufsetzbare Hörgerät weist hierbei einen vorzugsweise im Wesentlichen gradlinigen Bügelbereich und einen zum Ende hin anschließenden, vorzugsweise gekrümmten bzw, abgewinkelten, und verdickten Endbereich bzw. Löffelbereich auf. An seinem vorderen Ende weist das Hörgerätmodul einen Stecker auf, der in einen geeigneten Gegenstecker an einem Bügelansatz der Brille einsetzbar bzw. einsteckbar ist.

Anders als in z.B. der DE 103 43 010 B3 weist das erfindungsgemäße Hörgerätmodul somit auch einen Bügelbereich auf, d.h. erstreckt sich bis in den Bügel der gesamten Hörbrille.

Auf der Unterseite des Bügelbereichs ist ein Loch bzw. eine Öffnung für die Signalausgabe vorgesehen. Diese Signalausgabe kann bei Ausbildung des erfindungsgemäßen Hörgerätmoduls als Schallschlauchsystem zum Einsetzen eines Schallschlauchs, und bei Ausbildung des Hörgerätmoduls als Außenhörersystem als Austritt für ein Datenkabel bzw. eine Datenleitung zu dem Außenhörer verwendet werden, wobei die Datenleitung in dem Hörgerätmodul vorzugsweise mit variabler Länge aufgenommen ist. Somit kann der gleiche Grundkörper aus Bügelbereich-Gehäuse und Endbereich-Gehäuse für die Ausbildung unterschiedlicher Hörgerätsysteme eingesetzt werden, wobei lediglich je nach System entweder intern ein Hörer zur Schallausgabe eingesetzt wird oder an z. B. den Ausgangsverstärker die Datenleitung angeschlossen ist und längenverstellbar verankert wird. Bei der Ausbildung als Schallschlauchsystem kann der Benutzer oder ein von ihm beauftragter A-kustiker individuell einen Standard-Schallschlauch passend durch z. B. einen einfachen Schnitt kürzen und in eine Schallschlauchaufnahme einstecken.

Gemäß einer besonders bevorzugten Ausbildung ist der Bügelbereich des Hörgerätmoduls an den Bügelansatz der Brille in Formgebung und Dimensionierung angepasst. Somit ergibt sich ein durchgängiger Bügel. Vorteilhafterweise weist dieser Bügel einen Durchmesser von kleiner/gleich 3,4 mm auf. Eine derartige durchgängige Ausbildung des Bügels wird insbesondere durch die erfindungsgemäße Stecker-Buchse-Verbindung ermöglicht. Weiterhin sind mehrere Funktionseinrichtungen im Endbereich bzw. Löffelbereich angeordnet, insbesondere Verstärker, Batterie und ggf. Stelleinrichtungen wie z. B. Lautstärkeregelung; die Mikrofone können vorteilhafterweise im Bügelbereich des Hörgerätmoduls, insbesondere vor der Ausgabeöffnung, d. h. zwischen der Ausgabeöffnung und dem Stecker angeordnet sein, wozu z. B. ein oder zwei kleine Öffnungen im Gehäuse des Bügelbereichs ausgebildet sind, die z. B. über Schalleinlauftrichter zur Umlenkung um 90 Grad den Schall aufnehmen.

Die erfindungsgemäße Steckausbildung ermöglicht eine leichte Bedienbarkeit und individuelle Anpassbarkeit für jeden Benutzer, ohne hierfür jeweils die Hilfe eines Fachmanns in Anspruch nehmen zu müssen. Die Hörgerätmodule können standardisiert und somit in großen Serien kostengünstig hergestellt werden und sind leicht austauschbar. Hierbei ist die Steckverbindung vorteilhafterweise torsionsfest, um eine eindeutige Lage zu gewährleisten und Verdrehungen während der Benutzung zu verhindern.

Der Bügelbereich kann insbesondere durch zwei ineinander gesetzte Rohre ausgebildet werden, wobei in dem inneren Rohr entsprechend eine Aussparung oder Öffnung oder auch zwei Öffnungen für die Mikrofone, und weiterhin die Öffnung für die Signalausgabe ausgebildet ist, und das darüber gesetzte äußere Rohr diese Komponenten jeweils geeignet abdeckt. Hierbei wird erfindungsgemäß auch erkannt, dass mit dieser Ausbildung eine hohe Stabilität gewährleistet ist.

Im Endbereich ist das Gehäuse individuell kalt verformbar, wozu vorteilhafterweise ein Metallrohr gekrümmt in den Endbereich ragt und individuell durch Kaltverformungen verstellt werden kann. Somit ist insbesondere auch keine Erwärmung zur nachfolgenden Verformung erforderlich, wie es zum Teil bei herkömmlichen Endbereichen erforderlich ist.

Gemäß einer weiteren vorteilhaften Ausbildung kann das Hörgerätmodul einen von außen aufsetzbaren Tragehaken aufweisen zur Positionierung des Hörgerätemoduls als separates Bauteil am Außenohr eines Benutzers. Somit wird erfindungsgemäß auch ein Modulsatz aus einer erfindungsgemäßen Hörbrille, einem Tragehaken und einem Adapterstück zum Aufsetzen auf den Gegenstecker des Bügelansatzes zur Ausbildung eines Brillenbügels ohne Hörgerätefunktion geschaffen.

Gemäß dieser Ausbildung kann das Hörgerätmodul somit als eigenständiges Hörgerät zur Anbringung hinter dem Ohr bzw. am Außenohr des Benutzers, d. h. ohne zusätzliche Brille verwendet werden. Hierbei wird erkannt, dass das Hörgerätmodul bereits die volle erforderliche Funktionalität aufweist und weiterhin durch die Formgebung mit dem gekrümmten Endbereich und dem anschließenden Bügelbereich am Außenrohr des Benutzers getragen werden kann, wozu in diesem Fall der Endbereich etwas tiefer am Ohr angesetzt wird. Der Tragehaken kann aus z. B. Kunststoff oder Silikon gebildet und auf das Gehäuse aufschiebbar sein, z. B. von vorne über den Bügelbereich, der das Hörgerätmodul nach vorne sichert. Eine weitere Fixierung wird durch entweder den in den Gehörgang gesetzten Außenhörer oder den Schallschlauch erreicht; ergänzend kann vorteilhafterweise ein Concha-Clip als in die Concha des jeweiligen Außenrohres zu verspannender, elastischer Ansatz vorgesehen sein.

Das erfindungsgemäße Modulsystem kann weiterhin auch ein Adapter-Endstück aufweisen, das auf die Buchse bzw. Gegenstecker des Brillenansatzes aufsetzbar ist und somit eine Verwendung der optischen Brille ohne das erfindungsgemäße Hörgerätmodul ermöglicht.

Die Steckverbindung aus Stecker und Gegenstecker kann auch elektrisch leitend sein und eine Datenübertragung ermöglichen, so dass bei Ausbildung der Hörbrille mit zwei Funktionsbügeln eine Datenübertragung zwischen ihren beiden Bügeln erfolgen kann und sie somit als CROS oder BiC-ROS-System ausgebildet sein kann.

Somit wird erfindungsgemäß eine leichte Bedienbarkeit und Einstellbarkeit, eine großtechnische Fertigung insbesondere auch des Hörgerätmoduls, eine leichte Umrüstbarkeit zwischen Hörschlauch- und Außenhörersystem und insbesondere ein hochwertiges Design durch die Ausbildung eines durchgängigen Bügels geschaffen, der insbesondere auch das Design und Aussehen einer normalen Brille ermöglicht. Hierbei wird eine kompakte Ausbildung und vorteilhafterweise ein schlanker Brillenbügel erreicht.

Die Erfindung wird im Folgenden anhand der beiliegenden Zeichnungen an einigen Ausführungsformen näher erläutert. Es zeigen:
- Fig. 1: eine erfindungsgemäße Hörbrille mit einseitigem HörgerätModul in aufgestecktem Zustand;
- Fig. 2: die Verwendung des erfindungsgemäßen Hörgerätmoduls als eigenständiges Hörgerät;
- Fig. 3: den Bügelbereich eines erfindungsgemäßes Hörgerätmoduls mit Schallschlauch in geschnittener Darstellung;
- Fig. 3a: eine gegenüber Fig. 3 abgewandelte Ausführungsform;
- Fig. 4: den Bügelbereich eines erfindungsgemäßes Hörgerätmoduls mit Außenhörer in geschnittener Darstellung;
- Fig. 4a: eine gegenüber Fig. 3 abgewandelte Ausführungsform; und
- Fig. 5a: einen Axialschnitt durch den Kontaktbereich aus Stecker und Gegenstecker vor der Verrastung; und
- Fig. 5b: einen Axialschnitt durch den Kontaktbereich nach der Verrastung.

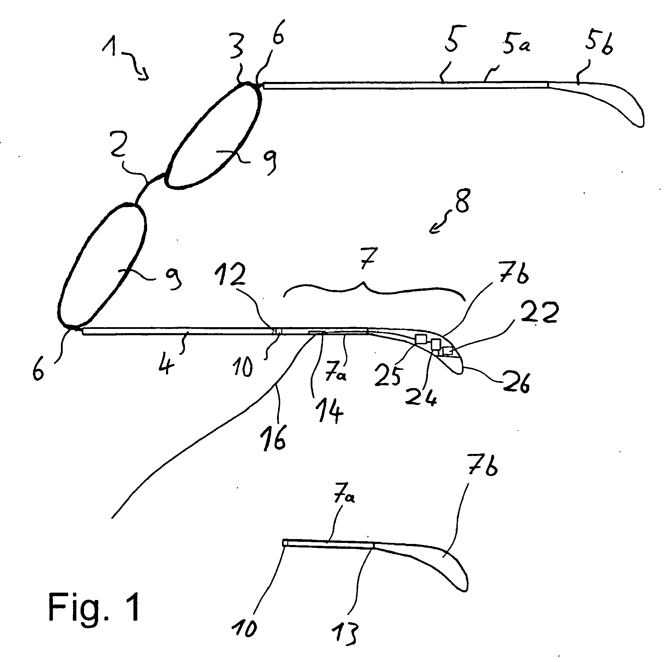

Eine Hörbrille 1, die auch als Hörgerätbrille bezeichnet werden kann, weist gemäß Figur 1 eine Brille 2 mit einem Optikgestell 3 zur Aufnahme von Gläsern 9, einen Bügelansatz 4, hier auf der linken Seite der Hörbrille 1, sowie bei dieser Ausführungsform einen Bügel 5 auf, wobei der Bügel 5 hier ohne weitere Funktionalität ausgebildet ist und zum Optikgestell 3 hin einen Bügelabschnitt 5a sowie zum Ende hin einen gebogenen Endbereich 5b aufweist, der auch als Löffel bezeichnet wird und zur mechanischen Fixierung bzw. Justage des Optikgestells 3 dient. Hierbei wird der gebogene Endbereich 5b am Außenrohr des Benutzers aufgenommen und kann mitsamt dem Bügelabschnitt 5a geeignet gebogen werden. Der Bügelabschnitt 5a ist im Wesentlichen geradlinig, vorzugsweise genau geradlinig bis zu dem gebogenen Endbereich 5b hin ausgebildet. Zwischen dem Optikgestell 3 und dem Bügel 5 ist im Allgemeinen ein Scharnier 6 ausgebildet, wobei allerdings auch bei hinreichend elastischer Ausbildung des geradlinigen Bügelabschnitts 5a feste Anbindungen möglich sind.

Auf der linken Seite der Hörbrille 1 ist auf den Bügelansatz 4 ein erfindungsgemäßes Hörgerätmodul 7 aufgesteckt. Der Bügelansatz 4 und das Hörgerätmodul 7 bilden zusammen einen Funktionsbügel 8, der erfindungsgemäß die gleiche - oder im Wesentlichen gleiche - Form wie der rechte Bügel 5 der Hörbrille 1 aufweist. Hierbei können der Bügel 5 und der Funktionsbügel 8 insbesondere gleiche Dimensionierungen und Abmessungen sowie die gleiche Formgebung aufweisen, auch kann entsprechend die Farbe gleich gewählt werden. Somit wird erfindungsgemäß eine Hörbrille 1 geschaffen, die sich optisch nicht von einer gewöhnlichen Brille unterscheidet.

Erfindungsgemäß weist das Hörgerätmodul 7 einen Bügelbereich 7a und einen verbreiterten, vorzugsweise gebogenen Endbereich 7b auf. Vorteilhafterweise sind der Endbereich 5b des Bügels 5 sowie der Endbereich 7b des Hörgerätmoduls 7 von der Formgebung identisch ausgebildet. Weiterhin bilden der Bügelansatz 4 der Brille 2 und der angesetzte Bügelbereich 7a des Hörgerätmoduls 7 zusammen einen durchgängigen, gradlinigen Bügelabschnitt, der dem Bügelabschnitt 5a des Bügels 5 in Größe und Formgebung entspricht, vorzugsweise identisch ist. Erfindungsgemäß können hierbei der Bügelbereich 7a, vorteilhafterweise auch der Bügelansatz 4 mit einem Durchmesser von kleiner/gleich 3, 4 mm ausgebildet werden, entsprechend vorteilhafterweise der Bügelabschnitt 5a des Bügels 5.

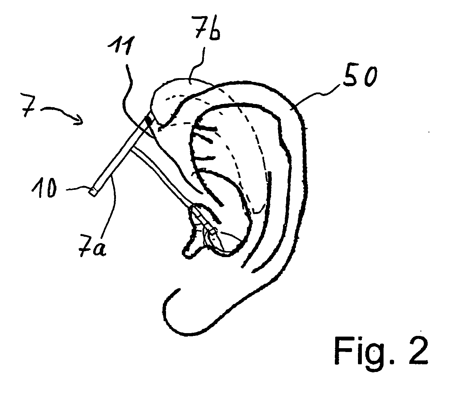

Weiterhin wird erfindungsgemäß ein Modulsystem bzw. Modulsatz mit einfacher Aufsetzbarkeit und Austauschbarkeit geschaffen. Hierbei kann das erfindungsgemäße Hörgerätmodul 7 auch eigenständig verwendet werden, indem ein Tragehaken 11 aus z. B. Kunststoff oder Silikon auf seinen Bügelbereich 7a geschoben wird, wie in Fig. 2 gezeigt. Hierzu können der Bügelbereich 7a und gegebenenfalls der Endbereich 7b geeignet gebogen werden, so dass sie mit dem Tragehaken 11 als an einem hier skizzierten Außenohr 50 angesetztes Hörgerät dienen. Zu dem Modulsatz gehört weiterhin ein in Fig. 1 mit gezeigtes Adapterstück 13 zum Aufsetzen auf den Bügelansatz 4, um die Brille 2 ohne das Hörgerätmodul 7 als gewöhnliche Brille zu tragen.

Am vorderen Ende des Bügelbereichs 7a ist ein Stecker 10 ausgebildet, der durch Längsverschieben in einen Gegenstecker 12 des Bügelansatzes 4 gesteckt wird, in diesen einschnappt und einrastet, und nachfolgend vom Benutzer wieder manuell herausgezogen werden kann. Der Gegenstecker 12 ist an einem Bügeldraht 4a des Bügelansatzes 4 befestigt, z. B. durch Laserschweißen oder Kleben.

Der Bügelbereich 7a weist als Gehäuse ein äußeres Rohr 27 und ein in das äußere Rohr 27 gesetztes inneres Rohr 28 auf. Das äußere Rohr 27 weist einen Außendurchmesser von weniger als 3,4 mm auf. Der Stecker 10 ist z. B. durch Laserschweißen am inneren Rohr 28 befestigt. Weiterhin sind in dem inneren Rohr 27 eine Signalausgabeöffnung 14 und eine weitere Öffnung 29 zum Einsetzen der Mikrofone 20 ausgebildet, wobei die Signalausgabeöffnung 14 und die Öffnung 29 zueinander axial versetzt und weiterhin in Umfangsrichtung entgegen gesetzt angeordnet sind, d.h. nach oben bzw. unten weisen. Die Mikrofone 20 sind somit zwischen der Signalausgabeöffnung 14 und dem Stecker 10 angeordnet. In dem inneren Rohr 28 sind hier zwei Mikrofone 20 in Längsrichtung eingesetzt, wobei Schallführungen 21 aus Kunststoff von an der Unterseite ausgebildeten Mikrofonöffnungen 19 her den Schall um 90° umleiten zu den Mikrofonen 20. Das äußere Rohr 27 deckt die Öffnung 29 zu, lässt aber die Signalausgabeöffnung 14 ebenfalls frei.

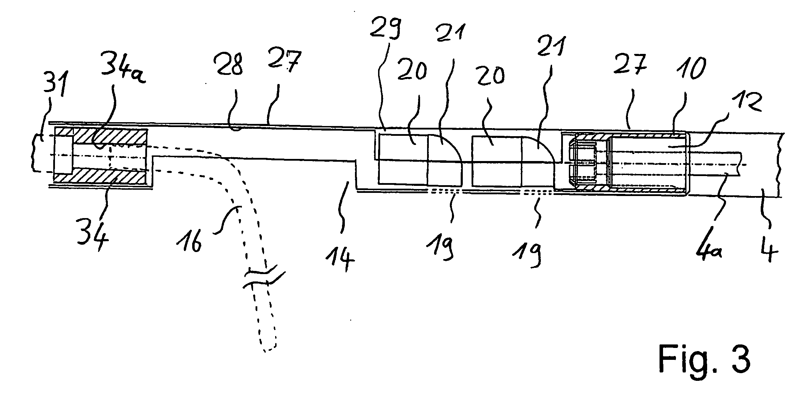

In dem Endbereich 7b sind bei allen Ausführungsformen ein Verstärker 24, eine Batterie 26 und Stelleinrichtungen 22 zur Einstellung, z. B. der Einstellung der Verstärkung vorgesehen und in bekannter Weise miteinander verbunden. In der Ausführungsform der Fig. 3 als Schallschlauchsystem ist in dem Endbereich 7b weiterhin ein Hörer 25 zur Schallausgabe vorgesehen, der am hinteren Ende eines auch in Fig. 3 gezeigten Führungsrohrs 31 sitzt, das sich bis in den Bügelbereich 7a erstreckt und an dessen vorderem Ende eine Schallschlauchaufnahme 34 als Rohr bzw. Hülse mit einer sich zu ihrem Ausgang hin konisch etwas aufweitendes Innenfläche 34a vorgesehen ist. An die Schallschlauchaufnahme 34 schließt die Signalausgabeöffnung 14 an. Der Benutzer kann somit einen Schallschlauch 16 aus z. B. Silikon für seine Anatomie passend kürzen, z. B. durch einen einfachen Schnitt, und durch die Signalausgabeöffnung 14 in die Schallschlauchaufnahme 34 bzw. in deren sich in Einschubrichtung verjüngende Innenfläche 34a einstecken, wo er verklemmt und somit fest sitzt.

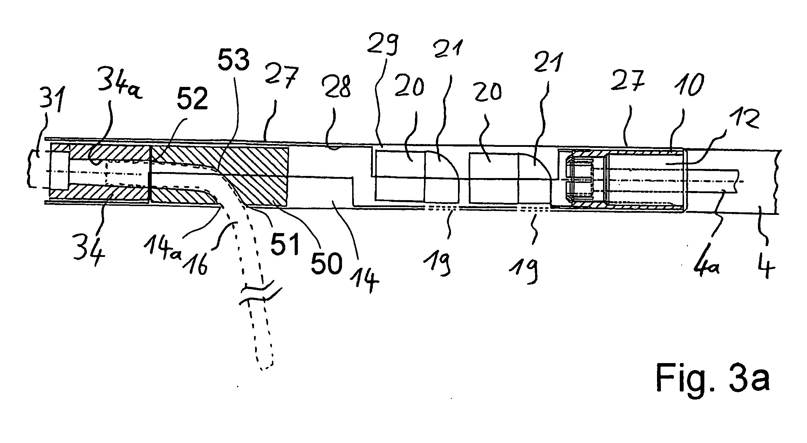

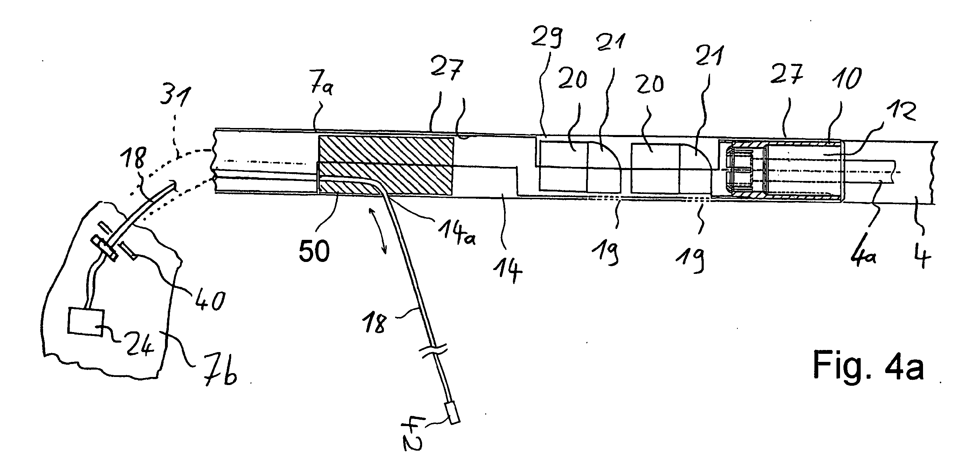

Bei der Ausführungsform der Fig. 4 ist das Hörgerätmodul 7 ohne Hörer ausgebildet, wobei die anderen Komponenten in dem Endbereich 7b unverändert sind. An den Verstärker 24 ist ein Außenhörerkabel 18 angeschlossen, das durch das Führungsrohr 31 bis zu der Signalausgabeöffnung 14 verläuft und aus dieser austritt, wobei an ihrem Ende ein Außenhörer 42 angeschlossen ist, der im Gehörgang eines Benutzers positioniert werden kann. Das Außenhörerkabel 18 ist längsverstellbar in dem Hörgerätmodul 7 aufgenommen, wobei ein Bereich, z. B. sein Endbereich, verdickt ist und in seiner ausgefahrenen Stellung gegen eine Arretierung 40 als Verliersicherung gelangt.

Die Steckverbindung aus Stecker 10 und Gegenstecker 12 kann insbesondere wie in Fig. 3 und 4 gezeigt durch eine nachgiebige, elastische, formschlüssige Hintergreifung an einem der beiden Teile, z. B. am Gegenstecker 12, und entsprechend einer Aufnahmebuchse an dem anderen Teil, z. B. dem Stecker 10, ausgebildet sein. Die Stecker 10 des Hörgerätmoduls 7 und des Adapterstücks 13 sind gleich ausgebildet.

Das Führungsrohr 31 ist aus einer Metalllegierung und kalt verbiegbar und dient somit auch der Steifigkeit bei der individuellen Biegeeinstellung des Hörgerätmoduls 7.

In den Ausführungsformen der Fig. 3a und 4a ist zum einen gezeigt, dass das äußere Rohr 27 auch die Signalausgabeöffnung 14 bedecken kann und ein Loch 14a zum Einführen des Hörschlauchs 16 bzw. des Außenhörerkabels 18 aufweisen kann.

Weiterhin kann gemäß Fig. 3a und 4a ein Führungs-Einsatzteil 50 eingesetzt sein, das den Hörschlauch 16 bzw. Außenhörerkabel 18 aufnimmt und führt. Das Führungs-Einsatzteil 50 kann vorzugsweise in die Signalausgabeöffnung 14 eingesetzt werden und wird durch das äußere Rohr 27 gehalten. Es kann z.B. als Kunststoff-Spritzgussteil ausgebildet sein. Indem die Signalausgabeöffnung 14 vorzugsweise etwas weniger als das halbe innere Rohr 28 einnimmt, kann das Führungs-Einsatzteil 50 in das innere Rohr 28 einschnappen. In Fig. 3a kann das Führungs-Einsatzteil 50 stirnseitig bis an die Schallschlauchaufnahme 34 geschoben werden, so dass ihre Lage festgelegt ist.

Das Führungs-Einsatzteil 50 weist eine innere Führung 53, z.B. als Bohrung, auf, die nach unten durch ein unteres Eintrittsloch 51 die Zuführung des Hörschlauchs 16 oder Außenhörerkabels 18 ermöglicht, und nach hinten ein Austrittsloch 52, das den Hörschlauch 16 bzw. das Außenhörerkabel 18 passgenau weiterleitet, in Fig. 3a somit zur Schallschlauchaufnahme 34 bzw. zu deren konisch etwas aufweitenden Innenfläche 34a. Das Eintrittsloch 51 fluchtet somit im wesentlichen mit dem Loch 14a. Somit wird erfindungsgemäß ein einfacher Einführvorgang für den Hörschlauch 16 bzw. das Außenhörerkabel 18 ermöglicht, ohne aufwändiges Einfädeln.

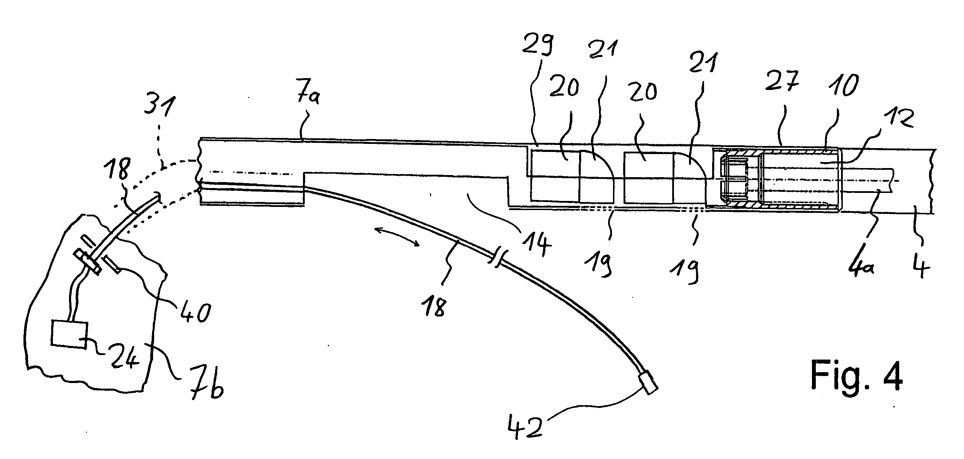

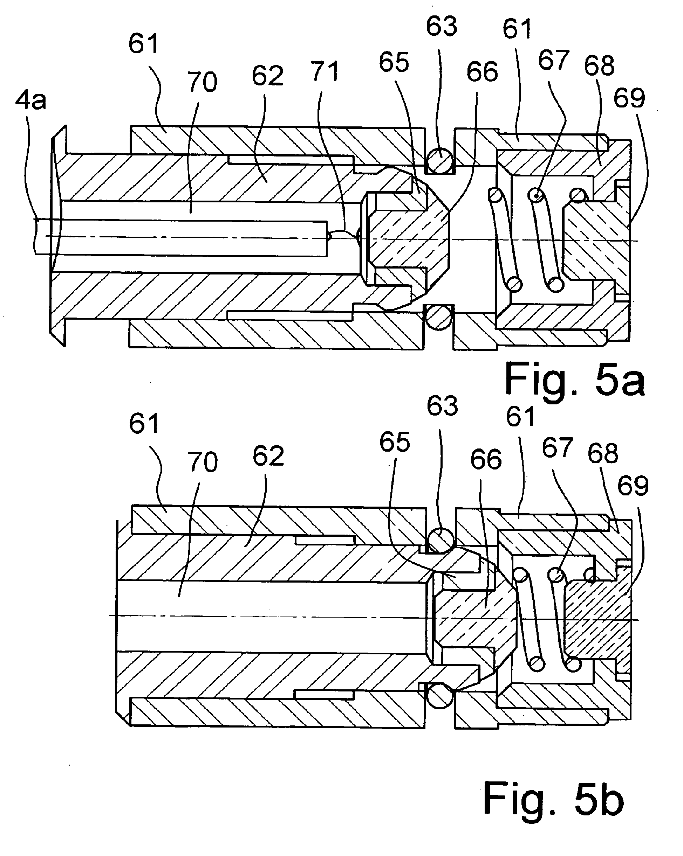

Fig. 5a und 5b zeigen die bevorzugte Ausbildung der Steckverbindung aus Stecker 10 und Gegenstecker 12, die für alle erfindungsgemäßen Ausführungsformen relevant ist. Der Gegenstecker 12 nimmt den Bügelansatz 4a auf, der z.B. in einem Innenraum 70 des Gegenstecker-Sockels 62 mittels eines Drahts 71 an einen Kontaktstift 66 gelötet ist. In Fig. 5b ist dies der Übersichtlichkeit halber nicht mehr dargestellt. Der Kontaktstift 66 ist über einen kegelförmigen Isolationsbereich 65 vom Gegenstecker- Sockel 62 isoliert.

Der Gegenstecker 12 wird in den Stecker 10 von links eingeschoben und arretiert in diesem gemäß Fig. 5b, indem ein am Stecker 10 vorgesehener Spanndraht 63 zuerst aufgeweitet wird und dann wieder einschnappt. Somit wird eine Arretierung ausgebildet. Diese mechanische Verbindung ist weiterhin auch torsionsfest.

Die elektrische Kontaktierung erfolgt über eine als z.B. Spiralfeder ausgebildete Kontaktfeder 67, die auf einen Kontaktstift-Sockel 69 des erfindungsgemäßen Hörgerätmoduls 7 gelegt ist und gegen die der Kontaktstift 66 gelangt, so dass die Kontaktfeder 67 hierdurch in Fig. 5b einfedert. Der Kontaktstift- Sockel 69 ist über einen Isolator-Sockel 68 von einem Stecker-Sockel 61 des Steckers 10 des Hörgerätmoduls 7 getrennt. Der Spanndraht 63 ist in dem Stecker-Sockel 61 aufgenommen.

Somit sind die Bauteile 61, 62, 63 miteinander kontaktiert und bilden eine ersten Kontakt, vorzugsweise Masse, wobei sind mit z.B. dem äußeren Rohr 27 und inneren Rohr 28 kontaktiert sein können. Die Bauteile 4a, 71, 66, 67, 69 bilden den zweiten Kontakt, d.h. die Signalleitung.

## Patentansprüche

1. Hörgerätmodul (7), das mindestens aufweist:
einen länglichen Bügelbereich (7a), an dessen vorderem Ende ein Stecker (10) für einen lösbaren Steckvorgang ausgebildet ist, einen sich nach hinten an den Bügelbereich (7a) anschließenden, verdickten Endbereich (7b),
einen in dem Endbereich (7b) aufgenommenen Verstärker (24), und
mindestens eine an der Unterseite des Bügelbereichs (7a) ausgebildete Signalausgabeöffnung (14) für ein flexibles Signalausgabe-Leitungsmittel (16, 18),
wobei der Endbereich (7b) kaltverformbar ist zur Einstellung unterschiedlicher Biegestellungen zur Positionierung an einem Außenohr, **dadurch gekennzeichnet, dass**
der Bügelbereich (7a) zwei ineinander gesetzte Rohre (27, 28) aufweist, wobei an dem inneren Rohr (28) der Stecker (10) ausgebildet ist,
in dem inneren Rohr (28) weiterhin ein Einsetzfreiraum (29) zum Einsetzen des mindestens eines Mikrofons (20) ausgebildet ist, wobei der Einsetzfreiraum (29) und die Signalausgabeöffnung (14) in axialer Richtung zueinander versetzt sind und jeweils etwa den halben Umfang des inneren Rohres (28) einnehmen, und das äußere Rohr (27) stirnseitig bis zu dem Stecker (10) vorgeschoben ist und den Einsetzfreiraum (29) für das mindestens eine Mikrofon (19) abdeckt.

2. Hörgerätmodul nach Anspruch 1, **dadurch gekennzeichnet, dass** der Bügelbereich (7a) gleichförmig mit konstantem Querschnitt, vorzugsweise mit Durchmesser kleiner/gleich 3.4 mm, ausgebildet ist.

3. Hörgerätmodul nach Anspruch 1 oder 2, **dadurch gekennzeichnet, dass** an der Unterseite des Bügelbereichs (7a) mindestens eine Mikrofonöffnung (19) für mindestens ein im Bügelbereich (7a) vorgesehenes Mikrofon (20) ausgebildet ist.

4. Hörgerätmodul nach Anspruch 3, **dadurch gekennzeichnet, dass** von der Mikrofonöffnung (19) zu dem Mikrofon (20) eine Schallführung (21) zum Umlenken der eintretenden Schallwellen um im Wesentlichen einen rechten Winkel zu dem Mikrofon (20) vorgesehen ist und das Mikrofon (20) im Wesentlichen zylindrisch ausgebildet in dem Bügelbereich (7a) zwischen dem Stecker (10) und der Signalausgabeöffnung (14) angeordnet ist.

5. Hörgerätmodul nach einem der vorherigen Ansprüche, **dadurch gekennzeichnet, dass** es weiterhin ein in die Signalausgabeöffnung (14) eingesetztes Führungs-Einsatzteil (50) zur Aufnahme und Führung des flexiblen Signalausgabe- Leitungsmittels (16, 18) aufweist.

6. Hörgerätmodul nach einem der vorherigen Ansprüche, **dadurch gekennzeichnet, dass** als Signalausgabe-Leitungsmittel ein Schallschlauch (16) vorgesehen ist, der von außen durch die Signalausgabe-Öffnung (14) des Bügelbereichs (7a) gesetzt und in eine Schallschlauchaufnahme (34), vorzugsweise mit einer sich verjüngenden Innenwand (34a), eingesetzt ist, wobei im Endbereich ein Hörer (25) zur Schallausgabe vorgesehen ist.

7. Hörgerätmodul nach einem der Ansprüche 1 bis 5, **dadurch gekennzeichnet, dass** Signalausgabe-Leitungsmittel ein Außenhörerkabel (18) ist, das durch die Signalausgabe-Öffnung (14) nach außen tritt und längenverstellbar in einer Arretierung (40) innerhalb des Hörgerätemoduls (7) verliersicher aufgenommen ist, und am Ende des Außenhörerkabels (18) ein Außenhörer (42) zum Einsetzen in den Gehörgang des Benutzers angeordnet ist, wobei das Außenhörerkabel (18) direkt oder indirekt mit dem Verstärker (24) verbunden ist.

8. Hörgerätmodul nach Anspruch 7, **dadurch gekennzeichnet, dass** die Arretierung (40) im Endbereich (7b) vorgesehen ist und eine Querschnittsverengung aufweist, so dass ein verdickter Endbereich des Außenhörerkabels (18) bei maximaler Längserstreckung gegen die Arretierung (40) gelangt.

9. Hörgerätmodul nach Anspruch 6 und Anspruch 7 oder 8, **dadurch gekennzeichnet, dass** das Signalausgabeleitungsmittel (16, 18) umrüstbar ist, wobei wahlweise ein Hörer (25) in den Endbereich (7b) aufnehmbar ist zur Ausbildung eines Schallschlauchsystems, oder ein eingesetzter Hörer (25) entfernbar und ein Außenhörerkabel (18) einsetzbar und anschließbar ist.

10. Hörbrille (1), die mindestens aufweist:
ein Hörgerätmodul (7) nach einem der vorherigen Ansprüche,
eine Brille (2) mit einem Optikgestell (3) zur Aufnahme von Brillengläsern (9) und mindestens einen Bügelansatz (4),
wobei am Ende des Bügelansatzes (4) ein Gegenstecker (12) zum lösbaren Einsetzen des Steckers (10) des Hörgerätmoduls (7) vorgesehen ist,
wobei der Bügelansatz (4) der Brille (2) und der Bügelbereich (7a) des Hörgerätmoduls (7) im Wesentlichen gleichen Querschnitt und Dimensionierung aufweisen.

11. Hörbrille (1) nach Anspruch 10, **dadurch gekennzeichnet, dass** der aus dem Hörgerätmodul (7) und dem Bügelansatz (4) gebildete Funktionsbügel (8) im Wesentlichen die gleiche äußere Formgebung wie der andere Bügel (5) aufweist.

12. Hörbrille nach einem der Ansprüche 10 oder 11, **dadurch gekennzeichnet, dass** der Bügelansatz (4) und der Bügelbereich (7a) des Hörgerätmoduls (7) zylindrisch ausgebildet sind, vorzugsweise mit einem Durchmesser kleiner/gleich 3,4 mm.

13. Hörbrille nach einem der Ansprüche 10 bis 12, **dadurch gekennzeichnet, dass** die Steckverbindung (10, 12) aus dem Stecker (10) des Hörgerätmoduls (7) und dem Gegenstecker (12) des Bügelansatzes (4) als mechanische, torsionssichere Arretierung und als elektrische Schnittstelle ausgebildet ist.

## Claims

1. Hearing aid module (7) which has at least:
an elongated side-piece region (7a), at the front end of which there is constructed a plug (10) for an undoable plugging-in operation;
a thickened end region (7b) which adjoins said side-piece region (7a) towards the rear;
an amplifier (24) which is received within said end region (7b); and
at least one signal output aperture (14), which is constructed on the underside of the side-piece region (7a), for a flexible signal output-conducting means (16, 18),
wherein the end region (7b) is cold-formable for setting different bending positions for positioning on an outer ear,
**characterised in that**
the side-piece region (7a) has two tubes (27, 28) which are slipped one into the other, wherein the plug (10) is constructed on the inner tube (28), and
there is also constructed, within the inner tube (28), an insertion clearance (29) for inserting the at least one microphone (20),
wherein said insertion clearance (29) and the signal output aperture (14) are offset in the axial direction in relation to one another and each take up about half the periphery of the inner tube (28), and the outer tube (27) is pushed forward, at the end face, as far as the plug (10) and masks the insertion clearance (29) for the at least one microphone (19).

2. Hearing aid module according to Claim 1, **characterised in that** the side-piece region (7a) is constructed in a uniform manner with a constant cross-section, preferably with a diameter smaller than/equal to 3.4 mm.

3. Hearing aid module according to Claim 1 or 2, **characterised in that** there is constructed, on the underside of the side-piece region (7a), at least one microphone aperture (19) for at least one microphone (20) which is provided in said side-piece region (7a).

4. Hearing aid module according to Claim 3, **characterised in that** there is provided, from the microphone aperture (19) to the microphone (20), a sound guide (21) for deflecting the incoming sound waves at substantially a right angle to said microphone (20), and said microphone (20) is arranged, in a substantially cylindrically constructed manner, in the side-piece region (7a) between the plug (10) and the signal output aperture (14).

5. Hearing aid module according to one of the previous claims, **characterised in that** it also has a guide insert part (50), which is inserted in the signal output aperture (14), for receiving and guiding the flexible signal output-conducting means (16, 18).

6. Hearing aid module according to one of the previous claims, **characterised in that** there is provided, as the signal output-conducting means, a sound tube (16) which is placed, from outside, through the signal output aperture (14) of the side-piece region (7a) and is inserted in a sound-tube receptacle (34), preferably having a tapering inner wall (34a), wherein a receiver (25) for outputting the sound is provided in the end region.

7. Hearing aid module according to one of Claims 1 to 5, **characterised in that** the signal output-conducting means is an external-receiver cable (18) which passes to the outside through the signal output aperture (14) and is received longitudinally adjustably in an arresting device (40) inside the hearing aid module (7) in a captive manner, and an external receiver (42) for insertion in the user's auditory canal is arranged at the end of the external-receiver cable (18), said external-receiver cable (18) being connected directly or indirectly to the amplifier (24).

8. Hearing aid module according to Claim 7, **characterised in that** the arresting device (40) is provided in the end region (7b) and has a narrowing in cross-section, so that a thickened end region of the external-receiver cable (18) arrives against the arresting device (40) at maximum longitudinal extension.

9. Hearing aid module according to Claim 6 and Claim 7 or 8, **characterised in that** the signal output-conducting means (16, 18) is convertible, it being possible, optionally, to receive a receiver (25) in the end region (7b) for the purpose of forming a sound-tube system, or to remove an inserted receiver (25) and insert and connect an external-receiver cable (18).

10. Hearing aid spectacles (1) which have at least:
a hearing aid module (7) according to one of the previous claims;
a pair of spectacles (2) with an optical frame (3) for receiving spectacle lenses (9) and at least one side-piece extension (4),
wherein there is provided, at the end of said side-piece extension (4), a counter-plug (12) for the undoable insertion of the plug (10) of the hearing aid module (7), and
wherein said side-piece extension (4) of the spectacles (2) and the side-piece region (7a) of said hearing aid module (7) have substantially the same cross-section and dimensioning.

11. Hearing aid spectacles (1) according to Claim 10, **characterised in that** the functional side-piece (8) formed from the hearing aid module (7) and the side-piece extension (4) has substantially the same external shape as the other side-piece (5).

12. Hearing aid spectacles according to either of Claims 10 or 11, **characterised in that** the side-piece extension (4) and the side-piece region (7a) of the hearing aid module (7) are of cylindrical construction, preferably with a diameter smaller than/equal to 3.4 mm.

13. Hearing aid spectacles according to one of Claims 10 to 12, **characterised in that** the plug connection (10, 12) consisting of the plug (10) of the hearing aid module (7) and the counter-plug (12) of the side-piece extension (4) is constructed as a mechanical, torsion-proof arresting device and as an electrical interface.

## Revendications

1. Module d'appareil auditif (7) présentant au moins :
une partie de branche allongée (7a), à l'extrémité avant de laquelle est formée une fiche (10) destinée à une connexion par fiche amovible, une partie d'extrémité (7b) épaissie se raccordant à la partie de branche (7a) vers l'arrière,
un amplificateur (24) reçu dans la partie d'extrémité (7b) et
au moins un orifice de sortie de signal (14) pratiqué dans la face inférieure de la partie de branche (7a) pour un moyen conducteur de sortie de signal souple (16, 18),
la partie d'extrémité (7b) étant déformable à froid pour le réglage de différentes positions de flexion pour le positionnement sur une oreille externe, **caractérisé en ce que**
la partie de branche (7a) présente deux tubes posés l'un dans l'autre (27, 28), la fiche (10) étant réalisée sur le tube intérieur (28),
**en ce qu'**en outre, un espace d'insertion libre (29) servant à insérer l'au moins un microphone (20) est réalisé dans le tube intérieur (28), l'espace d'insertion libre (29) et l'orifice de sortie de signal (14) étant décalés l'un par rapport à l'autre dans le sens axial et occupant respectivement environ la moitié de la circonférence du tube intérieur (28), et **en ce que**, côté frontal, le tube extérieur (27) est avancé jusqu'à la fiche (10) et recouvre l'espace d'insertion libre (29) pour l'au moins un microphone (19).

2. Module d'appareil auditif suivant la revendication 1, **caractérisé en ce que** la partie de branche (7a) est conçue de façon uniforme avec une section transversale constante, de préférence avec un diamètre inférieur ou égal à 3,4 mm.

3. Module d'appareil auditif suivant la revendication 1 ou 2, **caractérisé en ce qu'**au moins une ouverture (19) pour un microphone est pratiquée dans la face inférieure de la partie de branche (7a) pour au moins un microphone (20) prévu dans la partie de branche (7a).

4. Module d'appareil auditif suivant la revendication 3, **caractérisé en ce qu'**en outre, un système de guidage du son (21) est prévu entre l'ouverture du microphone (19) et le microphone (20) pour faire dévier les ondes sonores entrantes essentiellement d'un angle droit par rapport au microphone (20) et **en ce que** le microphone (20) de conception essentiellement cylindrique est disposé dans la partie de branche (7a) entre la fiche (10) et l'orifice de sortie de signal (14).

5. Module d'appareil auditif suivant une des revendications précédentes, **caractérisé en ce qu'**il présente, en plus, une pièce d'insertion et de guidage (50) insérée dans l'orifice de sortie de signal (14) pour la réception et le guidage du moyen conducteur de sortie de signal souple (16, 18).

6. Module d'appareil auditif suivant une des revendications précédentes, **caractérisé en ce qu'**un conduit acoustique est prévu comme moyen conducteur de la sortie de signal (16), conduit acoustique, qui est posé, depuis l'extérieur, à travers l'orifice de sortie de signal (14) de la partie de branche (7a), et inséré dans une réception de conduit acoustique (34), de préférence avec une paroi interne diminuée (34a), un écouteur (25) étant prévu dans la partie d'extrémité pour la sortie du son.

7. Module d'appareil auditif suivant une des revendications 1 à 5, **caractérisé en ce que** le moyen conducteur de la sortie de signal est un câble d'écouteur externe (18), qui passe à l'extérieur à travers l'orifice de sortie de signal (14) et qui est reçu de façon réglable en longueur et imperdable dans un système d'arrêt (40) à l'intérieur du module d'appareil auditif (7) et **en ce qu'** à l'extrémité du câble d'écouteur externe (18) est disposé un écouteur externe (42) destiné à être inséré dans le conduit auditif de l'utilisateur, le câble d'écouteur externe (18) étant relié directement ou indirectement à l'amplificateur (24).

8. Module d'appareil auditif suivant la revendication 7, **caractérisé en ce que** le système d'arrêt (40) est prévu dans la partie d'extrémité (7b) et présente un rétrécissement de section transversale de sorte qu'à dimension longitudinale maximale, une partie d'extrémité épaissie du câble d'écouteur externe (18) vient se placer contre le système d'arrêt (40).

9. Module d'appareil auditif suivant la revendication 6 et la revendication 7 ou 8 , **caractérisé en ce que** le moyen conducteur de sortie de signal (16, 18) peut être adapté, au choix, un écouteur (25) pouvant être reçu dans la partie d'extrémité (7b) pour constituer un système de conduit acoustique ou un écouteur inséré (25) pouvant être enlevé et remplacé par un câble d'écouteur externe (18) raccordable.

10. Lunettes auditives (1) présentant au moins :
un module d'appareil auditif (7) suivant une des revendications précédentes, des lunettes (2) avec une monture (3) servant à recevoir des verres à lunettes (9) et au moins une partie de départ de branche (4), à l'extrémité de laquelle étant prévue une contre-fiche (12) destinée à l'insertion amovible de la fiche (10) du module d'appareil auditif (7), la partie de départ de branche (4) des lunettes (2) et la partie de branche (7a) du module d'appareil auditif (7) présentant essentiellement une section transversale et un dimensionnement identiques.

11. Lunettes auditives (1) suivant la revendication 10, **caractérisées en ce que** la branche fonctionnelle (8) formée par le module à appareil auditif (7) et la partie de départ de branche (4) présente essentiellement la même forme extérieure que l'autre branche (5).

12. Lunettes auditives (1) suivant une des revendications 10 ou 11, **caractérisées en ce que** la partie de départ de branche (4) et la partie de branche (7a) du module d'appareil auditif (7) sont conçues cylindriques, de préférence avec un diamètre inférieur ou égal à 3,4 mm.

13. Lunettes auditives suivant une des revendications 10 à 12, **caractérisées en ce que** la connexion par fiche (10, 12) composée par la fiche (10) du module d'appareil auditif (7) et la contre-fiche (12) de la partie de départ de branche (4), est réalisée comme système d'arrêt mécanique, dont la torsion est impossible, et comme interface électrique.
